(19) Europäisches Patentamt
European Patent Office
Office européen des brevets

(11) Publication number: 0 032 431
B1

(12) EUROPEAN PATENT SPECIFICATION

(45) Date of publication of patent specification: 26.06.85

(51) Int. Cl.[4]: G 03 G 5/05

(21) Application number: 81300073.4

(22) Date of filing: 08.01.81

# (54) A method for preparing a heterogeneous photoconductive composition.

(30) Priority: 11.01.80 US 111428

(43) Date of publication of application:
22.07.81 Bulletin 81/29

(45) Publication of the grant of the patent:
26.06.85 Bulletin 85/26

(84) Designated Contracting States:
DE FR GB

(56) References cited:
FR-A-2 111 031
FR-A-2 114 510
FR-A-2 114 581
FR-A-2 114 583
US-A-4 175 960

(73) Proprietor: EASTMAN KODAK COMPANY
343 State Street
Rochester New York 14650 (US)

(72) Inventor: Contois, Lawrence Edward
Kodak Park
Rochester New York (US)

(74) Representative: Baron, Paul Alexander Clifford et al
Kodak Limited Patent Department Headstone Drive
Harrow Middlesex HA1 4TY (GB)



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a method of preparing a heterogeneous photoconductive composition.

Electrophotographic imaging compositions, materials and processes are extensively described in technological literature, including patents. Generally, such compositions and materials are used in processes wherein the photoconductive material comprising a coated layer of a photoconductive composition, is image-wise exposed to activating radiation. A latent electrostatic charge image is formed on the coated layer. The charge image is developed and fixed, thereby forming a permanent record of the image.

Heterogeneous photoconductive compositions and layers are useful in electrophotographic processes. Such photoconductive compositions are described in detail in U.S. Patent No. 3,615,414 and U.S. Patent No. 3,679,408. The heterogeneous photoconductive composition is multi-phase, comprising a continuous phase of an electrically insulating polymeric binder having dispersed therein a particulate discontinuous phase referred to as aggregate photoconductive particles. Heterogeneous, aggregate compositions may optionally include one or more organic photoconductors dissolved in the continuous phase. The aggregate photoconductive particles are co-crystalline complexes of a pyrylium dye and a polymeric material. Heterogeneous, aggregate compositions are capable of high speeds and very high image quality. The aggregate photoconductive particle size varies from about 0.01 to about 25 µm (micrometer). The predominant particle size in such compositions is typically greater than about 2 µm. This relatively large particle size impairs the high resolution capabilities of heterogeneous, aggregate photoconductive compositions. However the art does not teach a method for making aggregate photoconductive compositions having smaller particles in a narrower particle size distribution.

The present invention provides a method whereby aggregate photoconductive particles having a predominant particle size of less than about 1.0 µm are produced. By predominant is meant that over 50% of the particles have a size less than 1 µm. Such particles in combination with an electrically insulating polymer form heterogeneous photoconductive compositions having improved resolution capability. In US—A—3679406 a low temperature conditioning technique is employed in order to obtain sub-micrometer aggregate particle sizes.

In the preparation of aggregate photoconductive particles, a pyrylium dye is combined in solution with an electrically insulating polymer which is capable of forming the required co-crystalline complex. It has been discovered that the desired particle size and size distribution can be produced by employing as the electrically insulating polymer a blend of an aggregating polymer and a non-aggregating polymer. The non-aggregating polymer produces the desired particle size and size distribution of the aggregate particles formed in the blend. US—A—3679407 provides a technique whereby different binders can be employed in order to accommodate varying cristalline structures of the component materials.

The invention provides a method for the preparation of a heterogeneous photoconductive composition wherein a pyrylium dye is combined in solution with an electrically insulating polymer to form photoconductive aggregate particles having a predominant particle size of less than 1 micrometer, characterized in that the pyrylium dye is combined with a polymeric blend consisting of:

i) from 50.0 to 99.9 weight percent of a non-aggregating polymer effective to reduce particle size and particle size distribution of the aggregate particles formed in the blend, said non-aggregating polymer being selected from:

a) poly[(4,4'-alkylidene bis(aryleneoxy-p-arylene)sulfones)];

b) addition polymers and copolymers having pendant from at least 10% of the repeating units thereof a group selected from aryl, alkyl, acetate, aryl substituted acetals, halogen, halobenzoate, hydroxyl, and carboxyl, the aforesaid repeating units being derived from a compound having a polymerizable ethylenically unsaturated alkylene group containing two to four carbon atoms;

c) polymers and copolymers having at least 10% of the repeating units comprising a photoconductive component selected from substituted or unsubstituted carbazoles and substituted or unsubstituted triarylamines;

d) poly(4,4'-alkylidene-bis-2,2',6,6'-tetrahalo diarylene carbonates);

e) polyester polymers and copolymers derived from one or more aryldicarboxylic acids and one or more polyols selected from alkylene glycols; 4,4'-alkylidenediarylenediols; 4,4'-alkylidene-diaryleneoxyalkylenediols; 4,4'-polycycloalkylidenediarylenediols; and 4,4'-polycycloalkylidene-diaryleneoxyalkylenediols; including esters of such acids and polyols; or

f) poly[4,4'-(1-phenyl-2,2,2-trifluoroethylidene)-diphenylene carbonates] wherein alkyl and alkylene unless stated otherwise, have from 1 to 4 carbon atoms; halogen is chlorine, bromine or fluorine; aryl is phenyl or naphthyl; arylene is phenylene or naphthylene; and, polycycloalkylidene is a saturated hydrocarbon ring having up to 19 carbon atoms and

ii) from 0.1 to 50.0 weight percent of an aggregating polymer having repeating units according to the structure:

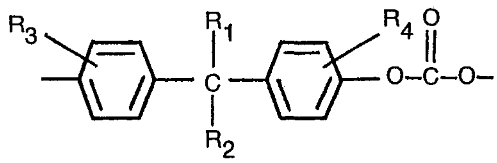

wherein:

$R_1$ and $R_2$, taken separately, are the same or different, and represent hydrogen or alkyl preferably having from 1 to 4 carbon atoms; or $R_1$ and $R_2$, taken together, represent the carbon atoms necessary to form a cyclic hydrocarbon radical having up to 14 ring carbon atoms; and

$R_3$ and $R_4$ represent hydrogen or alkyl preferably having from 1 to 4 carbon atoms;

provided that when $R_1$ and $R_2$ are both methyl, $R_3$ and $R_4$ must both be alkyl preferably having from 1 to 4 carbon atoms.

Examples of suitable polycycloalkylidene groups are norbornylidene and methanoindarylidene.

The aggregate particle size may be in the range of 0.5 to 2.0 μm.

Preferably, the predominant aggregate particle size is less than 0.5 μm.

Preferably, no particles have a size greater than 3.0 μm.

Preferably, the pyrylium dye used is a thiapyrylium dye.

The polymeric blend forming the binder component of the heterogeneous photoconductive composition of the present invention contains a) a non-aggregating polymer and b) an aggregating polymer. Without being limited by any theory as to the mechanism of the present invention, it is believed that the aggregating polymer interacts in some fashion with the pyrylium dye to promote formation of aggregate particles. The non-aggregating polymer, on the other hand, acts to retard the rate at which such aggregate particles form. The net result is small aggregate particles having a narrower aggregate particle size distribution than has been obtainable herefore.

Both the aggregating and the non-aggregating polymers are electrically insulating film forming materials. Such polymers are also characterized by an inherent viscosity of about 0.25 to about 2.0 as measured in 1,2-dichloroethane at a concentration of 0.25 g/100 ml and a temperature of about 25°C. Any polymer which has the above characteristics and which does not promote aggregation may be used as the non-aggregating polymer.

Table I presents examples of representative non-aggregating polymers used in the blends of the invention.

TABLE I

1. poly(4,4′-hexahydro-4,7-methanoindan-5-ylidene diphenyl terephthalate)
2. poly[4,4′-isopropylidene bis(phenyleneoxy-p-phenylene)sulfone]
3. polystyrene
4. poly(4,4′-isopropylidenebisphenoxyethyl-co-ethylene terephthalate)
5. poly(styrene-co-butadiene)
6. poly(methyl methacrylate)
7. poly(ethyl methacrylate)
8. poly(t-butyl methacrylate)
9. poly(ethylene-co-neopentyl terephthalate)
10. poly(ethylene-*co*-neopentyl isophthalate-co-terephthalate)
11. poly(vinyl butyral-co-vinyl acetate-co-vinyl alcohol)
12. poly(vinyl alcohol-co-vinyl-o-chlorobenzal)
13. chlorinated polyethylene
14. poly(chlorotrifluroethylene)
15. poly(4,4′-isopropylidene-2,2′,6,6′-tetrachlorodiphenylene carbonate)
16. poly(vinyl m-bromobenzoate)
17. poly(vinyl chloride-vinylidene chloride)
18. poly[4,4′-(1-phenyl-2,2,2-trifluoroethylidene)diphenylene carbonate]
19. poly(vinyl acetate)
20. poly(vinyl acetate-co-crotonic acid)
21. poly(N-vinyl carbazole)
22. poly(N-allylcarbazole)
23. poly(3,6-dibromo-9-vinyl carbazole)
24. copolymer of N-vinyl carbazole and N-vinyl pyridine
25. poly[N-(2-p-vinylbenzoylethyl)-carbazole]
26. poly-9-(4-pentenyl)carbazole
27. poly(4-vinyl-d-(N-carbazyl)-toluene
28. poly(sebacyltriphenylamine)
29. poly[4-(di-p-tolylamino)styrene]
30. poly(hexamethylenetriphenylamine)
31. poly(decamethylenetriphenylamine)

32. poly(vinyl-p-diphenylaminobenzaldehyde acetal-co-vinyl-m-bromobenzoate)
33. poly(vinyl-m-bromobenzoate-co-p-diphenylamino benzoate)
34. poly(vinyl-m-bromobenzoate-co-p-diphenylaminophenyl propionate)
35. poly[N-(acrylyl)-carbazole]

Preferably, the non-aggregating polymer is selected from poly[4,4'-(hexahydro-4-7-methanoindan-5-ylidene)diphenyl terephthalate]; poly[4,4'-isopropylidene bis(phenyleneoxy-p-phenylene)sulfone]; polystyrene; poly(4,4'-isopropylidene bisphenoxyethyl-co-ethylene terephthalate); halogenated polyethylene; poly(vinyl chloride-vinylidene chloride); poly[4,4'-(1-phenyl-2,2,2-trifluoroethylidene)-diphenylene carbonate]; polyvinyl acetate; poly(alkylmethacrylate); poly(vinylacetate-co-crotonic acid) and poly(N-vinylcarbazole).

A list of preferred aggregating polymers are presented in Table II.

TABLE II

1. poly[4,4'-(2-norbornylidene diphenylene) carbonate]
2. poly[4,4'-(hexahydro-4,7-methanoindan-5-ylidene)-diphenylene carbonate]
3. poly(4,4'-cyclohexylidenediphenylene carbonate)
4. poly[4,4'-methylidene-bis(2-methylphenylene) carbonate]

The heterogeneous photoconductive compositions containing aggregate photoconductive particles according to the present invention may be prepared by combining a pyrylium dye in solution with the polymeric blend. The solution of the dye and the polymeric blend are then treated to form the aggregate as taught in the prior art. Methods of forming the solution of the dye and the polymers and of treating the solution to form the aggregate photoconductive particles include methods of fuming as disclosed in U.S. Patent No. 3,615,414; or the so-called "dye-first" technique described in U.S. Patent No. 3,615,396; or the so-called "shearing" method described in U.S. Patent No. 3,615,415; or the two-stage dilution technique described in U.S. Patent No. 3,679,408.

In any case, by whatever method prepared, heterogeneous compositions containing the aggregate photoconductive particles and the polymeric blends according to the present inventions, exhibit a separately identifiable multi-phase structure. The heterogeneous nature of this multi-phase composition is generally apparent when viewed at 2500 × magnification, although such compositions may appear to be substantially optically clear to the naked eye in the absence of magnification. The aggregate photoconductive particles in the composition are co-crystalline complexes which comprise a pyrylium dye and an aggregating polymer as defined hereinbefore in Formula I.

Pyrylium dyes (including pyrylium, thiapyrylium and selenapyrylium) which are useful in forming aggregate photoconductive particles are disclosed in U.S. Patent No. 3,615,414. Particularly useful dyes in forming aggregate particles are pyrylium dye salts having the formula:

II.

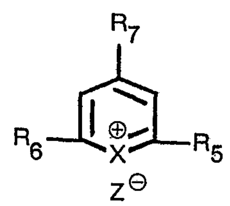

wherein:

X is oxygen, sulfur or selenium;

$R_5$ and $R_6$ are each phenyl radicals, including substituted phenyl radicals having at least one substituent chosen from alkyl radicals of from 1 to about 6 carbon atoms and alkoxy radicals having from 1 to about 6 carbon atoms;

$R_7$ is an alkylamino-substituted phenyl radical having from 1 to 6 carbon atoms in the alkyl moiety, and including dialkylamino-substituted and haloalkylamino-substituted phenyl radicals; and

$Z^{\ominus}$ is an anionic function including such anions as tetrafluoroborate, hexafluorophosphate, p-toluene sulphonate, iodide, chloride, bromide, sulphate and perchlorate.

The amount of pyrylium dye salt used in forming the aggregate photoconductive particles varies. Useful results are obtained by employing the described pyrylium dyes in amounts of from about 0.001 to about 50 percent based on the dry weight of the heterogeneous photoconductive layer.

The amount of the total polymer blend used in the compositions of this invention also varies. Typically, the composition contains an amount of the polymer blend within the range of from about 20 to 98 weight percent based on the dry weight of a layer formed from the composition, although larger or smaller amounts are also used.

Optionally, one or more photoconductors, including polymeric photoconductors may be incorporated into the heterogeneous photoconductive composition of the invention. Useful photoconductors are organic, including metalloorganic, photoconductors which can be solubilized in the polymeric blend component of the composition. By employing these photoconductors in the composition, it has been found

that the resultant sensitivity of the composition and the photoconductive material comprising a layer of the compositions are in some cases, enhanced.

In general, from about 5 to about 40 weight percent of organic photoconductors may be used in the compositions of this invention, although amounts outside this range will provide useful results in certain applications. The organic photoconductors preferred for use include the tri-substituted methanes disclosed in U.S. Patent No. 3,820,989, and the triarylmethane leuco bases disclosed in U.S. Patent No. 3,542,547, including mixtures of these photoconductors. Other useful organic photoconductors include:

1. carbazole materials including carbazole, N-ethyl-carbazole, N-isopropylcarbazole, N-phenylcarbazole, halogenated carbazoles, and various polymeric carbazole materials such as poly(vinylcarbazole) and halogenated poly(vinylcarbazole).

2. arylamine-containing materials including monoarylamines, diarylamines, triarylamines, as well as polymeric arylamines. Examples of specific arylamine organic photoconductors include the particular non-polymeric triphenylamines illustrated in U.S. Patent No. 3,180,730; the polymeric triarylamines described in U.S. Patent No. 3,240,597; the triarylamines having at least one of the aryl radicals substituted by either a vinyl radical or a vinylene radical having at least one active hydrogen-containing group as described in U.S. Patent No. 3,567,450; the triarylamines in which at least one of the aryl radicals is substituted by an active hydrogen-containing group as described in U.S. Patent No. 3,658,520; and tritolylamine.

3. polyarylalkane materials of the type described in U.S. Patents Nos. 3,274,000; 3,542,547; 3,542,544; and 3,615,402. Preferred polyarylalkane photoconductors are represented by the formula

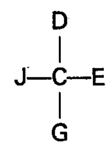

wherein D and G, which are the same or different, represent aryl groups and J and E, which are the same or different, represent a hydrogen atom, an alkyl group, or an aryl group, at least one of D, E and G containing an amino substitutent. Especially useful as the charge transport material is a polyarylalkane having the formula noted above wherein J and E represent a hydrogen atom, an aryl group, or an alkyl group and D and G represent substituted aryl groups having as a substituent thereof a group represented by the formula:

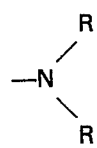

wherein R represents an unsubstituted aryl group such as phenyl or an alkyl substituted aryl group such as a tolyl group. Additional information concerning certain of these latter polyarylalkane materials is found in U.S. Patent No. 4,127,412.

4. strong Lewis base materials such as various aromatic compounds including aromatically unsaturated heterocyclic-containing materials which are free of strong electron withdrawing groups. Examples of such aromatic Lewis base materials include tetraphenylpyrene, 1-methylpyrene, perylene, chrysene, anthracene, tetraphene, 2-phenylnaphthalene, azapyrene, fluorene, fluorenone, 1-ethylpyrene, acetylpyrene, 2,3-benzochrysene, 3,4-benzopyrene, 1,4-bromopyrene, phenylindole, poly(vinylcarbazole), poly(vinylpyrene), poly(vinyltetracene), and poly(vinylperylene).

5. other useful p-type charge-transport materials which are useful with the present invention are any of the p-type organic photoconductors, including metallo-organo materials, known to be useful in electrophotographic processes, such as any of the organic photoconductive materials described in U.S. Patent No. 3,615,414 and *Research Disclosure*, Vol. 109, May 1973, pages 61—67, paragraph IV (A) (2) to (13) which are p-type photoconductors.

The following examples are presented to further illustrate and clarify the invention:

Example 1

In order to compare the size distribution of aggregate photoconductive particles according to the present invention, with that of previously described aggregate photoconductive particles, the following procedure was used. Surface view color photomicrographs of the following products were taken at a magnification of 1870 ×.

Product (1)

A 0.3 gram portion of the dye 4-(4-dimethylaminophenyl)-2,6-diphenylthiapyrylium fluoroborate is dissolved with stirring in 56.7 grams of dichloromethane. 6.0 grams of poly[4,4'-(2-norbornylidene

diphenylene) carbonate] and 4.0 grams of 4,4'-diethylamino-2,2'-dimethyltriphenylmethane are then added, and the resulting dope is stirred for one hour. The composition is coated at a wet thickness of 75 μm on a conductive support comprising poly(ethylene terephthalate) bearing a layer of nickel coated by evaporation in vacuum to an optical density of about 0.4 and dried.

Product (2)

A 0.3 gram portion of the dye 4-(4-dimethylaminophenyl)-2,6-diphenylthiapyrylium fluoroborate is dissolved with stirring in 40.0 grams of dichloromethane. 6.0 grams of Bisphenol A polycarbonate (Lexan 105, General Electric Company) and 4.0 grams of 4,4'-diethylamino-2,2'-dimethyltriphenylmethane are added and the resulting dope is stirred for one hour. The dope is allowed to stand without further agitation for 16 hours at a temperature of about 23°C. The dope is diluted by addition of a further 16.7 grams of dichloromethane. The percent solids, originally 20.5%, is reduced to 15.4% by the addition of this amount of solvent. The composition is coated at a wet thickness of 75 μm on a conductive support comprising poly(ethylene terephthalate) bearing a layer of nickel coated by evaporation in vacuum to an optical density of about 0.4 and dried.

Product (3)

A mixture is prepared from 85 part by weight of dichloromethane and 0.3 parts by weight of 4-(4-di-methylaminophenyl)-2,6-diphenylthiapyrylium fluoroborate. The mixture is stirred for 2 hours at about 20°C until complete solution is obtained. Then 0.63 parts of Polymer I. Table II plus 8.37 parts of Polymer 4, Table I are added with further stirring at about 20°C, for an additional 2 hours. The photoconductor 4,4'-diethylamino-2,2'-dimethyltriphenylmethane, at 6 parts by weight, is then added and the solution is stirred rapidly for about 1/2 hour. The solution is not subjected to shearing. The composition is coated on a poly(ethylene terephthalate) film base carrying a vapor deposited thin conducting layer of nickel. The thickness of the dry coating is from about 10 to 12 μm.

Electrophotographic copies of these color photomicrographs were made in order to increase the contrast between the aggregate particles and the surrounding medium. Each particle in the photomicrograph was then measured by hand in millimeters, counted and categorized according to size. In some case where, for example, the aggregate particle was oblong or elongated, the length of the particle and its smallest diameter was measured. The length and this diameter were added together and divided by two. The result was considered the size of the aggregate particle. Also, in cases where it was difficult to determine accurately the boundaries of the particles, the apparent particle size was measured. This means that a cluster of aggregate particles was considered as being one particle. Measurements, taken in millimeters at about 1870 × magnification, were multiplied by a factor of 0.53 to convert from millimeters to micrometers. Each measurement was rounded off to the nearest micrometer. In situations where the particle sizes were extremely small, only the particles appearing in a portion of the photomicrograph were actually measured, counted and categorized according to size. For an example, if only 25 percent of the photomicrograph was evaluated, each size category was multiplied by 4. Thus the size distribution for the entire photomicrograph could be determined. The number of particles in each particle size category was tabulated as reported in Table III.

Results are tabulated in Table III. The data of Table III shows that the predominant aggregate particle size in the heterogeneous photoconductive composition of the invention (composition 3), is less than about 1 μm with no aggregate particles having a size greater than 3 μm. On the other hand, compositions 1 and 2 have extremely few aggregate particles having a size less than 1.0 μm. The predominant size in these compositions is about 2 μm with a significant number of particles larger than 2 μm.

TABLE III
Size distribution of aggregate photoconductive particles

| Average particle size (μm) | (1) Polymer 1 (control) | (2) Bisphenol-A polycarbonate | (3) 7% Polymer 1 table II+93% polymer 4 table I |
|---|---|---|---|
| <1 | 2 | 10 | 400 |
| 1 | 50 | 84 | 80 |
| 2 | 223 | 108 | 8 |
| 3 | 13 | 28 | 8 |
| 4 | 4 | 14 | 0 |
| 5 | 1 | 10 | 0 |
| 6 | 0 | 2 | 0 |
| 7 | 0 | 0 | 0 |
| 8 | 0 | 2 | 0 |
| 9 | 1 | 0 | 0 |
| 10 | 1 | 0 | 0 |
| 11 | 1 | 0 | 0 |
| 12 | 0 | 0 | 0 |

Examples 2—6

The following basic formulation was used in Examples 2—6 to demonstrate the unexpected results obtained with the present invention.

| Component | (Parts by weight) |
|---|---|
| Polymer blends of the present invention. | 60 |
| Organic photoconductor 4,4′-benzylidenebis (N,N-diethyl-m-toluidine) | 40 |
| Sensitizer 2,6-diphenyl-4-(4-dimethyl aminophenyl) thiapyrylium perchlorate | 2 |

Coating compositions of the various formulations were prepared according to Example I, Product (3) as described above. Hand coatings were made using a 125 μm (5-mil) coating blade and a 0.4 optical density nickel coated polyester film support. The dry coating coverage of each coated layer was about 10 μm thick.

A solvent fuming treatment was required for aggregation except when polymer 3 of Table I was used in the blend. Blends using polymer 3 aggregated spontaneously. In the fuming treatment, the coated formulation was taped to a glass plate and placed face down over a glass crystallizing dish containing a solvent. A gap of approximately 0.5 cm was maintained between the coating and solvent surface. Fuming times on the order of five minutes were used. The fuming solvent used was dichloromethane ($MeCl_2$).

Observations again showed that the predominant aggregate photoconductive particle size for the layers of the invention was less than about 1.0 μm. The particle size in the control was between 1 and 2 μm. The data of Table IV shows that the particle size of the various blends is generally less than 1.0 μm. The highest particle size in the table is 2 μm. In many cases the predominant particle size is 0.5 μm or less. The particle sizes were measured as in Example 1.

TABLE IV

Size of aggregate photoconductive particles in various polymeric blends

| Example No. | Table I Polymer | + Table II Polymer | Particle size (μm) |
|---|---|---|---|
| 2 | — | Polymer 1 (control) | 1—2 |
| 3 | Polymer 1 | + 10% Polymer 1 | <0.5-rare* 1.0 |
| | Polymer 1 | + 5% Polymer 1 | <0.5 (hard to resolve) |
| | Polymer 1 | + 2.5% Polymer 1 | ** |
| | Polymer 1 | + 0% Polymer 1 | Dye Crystals (no aggregation) |
| 4 | Polymer 2 | + 10% Polymer 1 | <0.5-rare* 2 |
| | Polymer 2 | + 5% Polymer 1 | <0.5 (hard to resolve) |
| | Polymer 2 | + 2.5% Polymer 1 | ** |
| | Polymer 2 | + 0% Polymer 1 | Dye Crystals (no aggregation) |
| 5 | Polymer 4 | + 10% Polymer 1 | <0.5-rare* 2.0 |
| | Polymer 4 | + 5% Polymer 1 | <0.5 (hard to resolve) |
| | Polymer 4 | + 2.5% Polymer 1 | ** |
| | Polymer 4 | + 0% Polymer 1 | (no aggregation) |
| 6 | Polymer 3 | + 10% Polymer 1 | 0.5—2 } predominant particle size less than 1.0 μ. |
| | Polymer 3 | + 5% Polymer 1 | 0.5—2 } predominant particle size less than 1.0 μ. |
| | Polymer 3 | + 2.5% Polymer 1 | 0.5 |
| | Polymer 3 | + 0% Polymer 1 | Dye Crystals (no aggregation) |

*Only a very few particles having the indicated size were observed.
**Appears homogeneous at 2500×.

Examples 7—12

Six additional heterogeneous photoconductive compositions containing polymeric blends according to this invention were prepared as in Examples 2—6. The resulting size of the aggregate photoconductive particles in each blend is presented in Table V. Particle size was measured as in Example 1.

TABLE V

Size of aggregate photoconductive particles in various polymeric blends

| Example No. | Table I Polymer | + Table II Polymer | Particle size (μm) |
|---|---|---|---|
| 7 | Polymer 4 | + 0.5% Polymer 1 | ≪0.5—0.5 μm |
| 8 | Polymer 4 | + 2.5% Polymer 1 | ≪0.5—0.5 μm |
| 9 | Polymer 4 | + 5.0% Polymer 1 | ≪0.5—0.5 μm |
| 10 | Polymer 3 | + 0.5% Polymer 1* | 0.5 μm |
| 11 | Polymer 3 | + 2.5% Polymer 1* | 0.5 μm |
| 12 | Polymer 3 | + 5.0% Polymer 1* | 0.5—2.0 μm (predominant particle size less than about 1.0 μm) |

*Polystyrene-based binder produced aggregation upon coating.
≪signifies considerably less than the indicated number.

Examples 13—28

Sixteen (16) different polymeric blends were prepared. Each blend was used to prepare, according to Examples 2—6, 16 different heterogeneous photoconductive compositions. The basic formulation consisted of, on a weight to weight basis, 3.4% of polymer 1 of Table II; 30% of 4,4′-diethylamino-2, 2′-dimethyltriphenylmethane; 2% of 4-p-dimethylaminophenyl-2,6-diphenyl thiapyrylium perchlorate and 64.6% of one of polymers 5—20 of Table I.

In each of the 16 heterogeneous photoconductive compositions very fine aggregate photoconductive particles observed were consistent with the particle sizes observed in the layers of the invention in Examples 1—6.

Examples 29—30

Two different polymeric blends were prepared. Each blend was used to prepare a heterogeneous photoconductive composition as in Examples 2—6. The resulting photoconductive compositions consisted of 64.6% of either polymer 2 or polymer 3 from Table I; 30% 4,4′-diethylamino-2,2′-dimethyltriphenylmethane; 2% of 4-p-dimethylaminophenyl-2,6-diphenyl thiapyrylium perchlorate and 3.4% polymer 3 from Table II. Very fine grain aggregate particles were observed consistent in size with aggregate particles observed in the layers of the invention of Examples 1—6.

Examples 31—33

Three (3) different polymeric blends were prepared containing photoconductive non-aggregating polymer 21. Table I (poly(n-vinylcarbazole) and 2.5, 5.0 and 10% of polymer 1, Table II. Each blend was used to prepare three different heterogeneous photoconductive compositions according to Examples 2—6 except that no photoconductor other than polymer 21 was used. Each blend exhibited very fine aggregate photoconductive particles consistent in size with the particles observed in the layers of the invention in Examples 1—6.

Examples 34—37

Four (4) different heterogeneous photoconductive compositions were prepared as in Examples 2—6. Each composition included 40 parts by weight of 4,4′-benzylidene-(N,N-diethyl-m-toluidine). Other components of the compositions were as follows:

| | Polymeric blend | | |
|---|---|---|---|
| Example | Table I polymer | Table II polymer | Dye sensitizer |
| 34 | 50% Polymer 4 | 50% Polymer 1 | 4-p-dimethylamino- |
| 35 | 90% Polymer 4 | 10% Polymer 1 | phenyl-2,6-di-phenylpyrylium p-toluene sulphonate |
| 36 | 50% Polymer 4 | 50% Polymer 1 | a mixture consist- |
| 37 | 90% Polymer 4 | 10% Polymer 1 | ing of 70% of the pyrylium dye used in Examples 34 and 35 plus 30% 4-p-dimethylaminophenyl-2,6-diphenylthia-pyrylium $ClO_4^-$ |

Very fine aggregate photoconductive particles having sizes consistent with the aggregate particles measured in Examples 1—6 were observed.

Examples 38 and 39

Additional heterogeneous photoconductive compositions are prepared wherein a pyrylium sensitizer: 4-p-dimethylaminophenyl-2,6-diphenylpyrylium-p-toluenesulfonate (Example 38) and a selenapyrylium sensitizer: 4-(4-Dimethylaminophenyl)-2,6-dimethylselenapyrylium perchlorate (Example 39) were substituted for the thiapyrylium sensitizer used in Examples 2—6. Very fine grain aggregate particles are obtained which are consistent in size with the aggregate particles observed in Examples 1—6.

**Claims**

1. A method for the preparation of a heterogeneous photoconductive composition wherein a pyrylium dye is combined in solution with an electrically insulating polymer to form photoconductive aggregate

particles having a predominant particle size of less than 1 micrometer, characterized in that the pyrylium dye is combined with a polymeric blend consisting of:

i) from 50.0 to 99.9 weight percent of a non-aggregating polymer effective to reduce particle size and particle size distribution of the aggregate particles formed in the blend, said non-aggregating polymer being selected from:

a) poly[(4,4'-alkylidene bis(aryleneoxy-p-arylene)sulfones)];

b) addition polymers and copolymers having pendant from at least 10% of the repeating units thereof a group selected from aryl, alkyl, acetate, aryl substituted acetals, halogen, halobenzoate, hydroxyl, and carboxyl, the aforesaid repeating units being derived from a compound having a polymerizable ethylenically unsaturated alkylene group containing two to four carbon atoms;

c) polymers and copolymers having at least 10% of the repeating units comprising a photoconductive component selected from substituted or unsubstituted carbazoles and substituted or unsubstituted triarylamines;

d) poly(4,4'-alkylidene-bis-2,2',6,6'-tetrahalo diarylene carbonates);

e) polyester polymers and copolymers derived from one or more aryldicarboxylic acids and one or more polyols selected from alkylene glycols; 4,4'-alkylidenediarylenediols; 4,4'-alkylidenediaryleneoxy-alkylenediols; 4,4'-polycycloalkylidenediarylenediols; and 4,4'-polycycloalkylidene-diaryleneoxyalkylenediols; including esters of such acids and polyols; or

f) poly[4,4'-(1-phenyl-2,2,2-trifluoroethylidene)-diphenylene carbonates] wherein alkyl and alkylene unless stated otherwise, have from 1 to 4 carbon atoms; halogen is chlorine, bromine or fluorine; aryl is phenyl or naphthyl; arylene is phenylene or naphthylene; and, polycycloalkylidene is a saturated hydrocarbon ring having up to 19 carbon atoms and

ii) from 0.1 to 50.0 weight percent of an aggregating polymer having repeating units according to the structure:

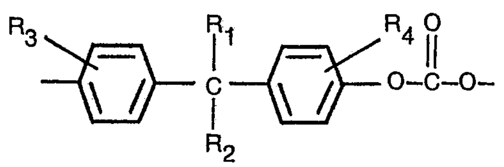
,

wherein:

$R_1$ and $R_2$, taken separately, are the same or different, and represent hydrogen or alkyl; or $R_1$ and $R_2$, taken together, represent the carbon atoms necessary to form a cyclic hydrocarbon radical having up to 14 ring carbon atoms; and

$R_3$ and $R_4$ represent hydrogen or alkyl;

provided that when $R_1$ and $R_2$ are both methyl, $R_3$ and $R_4$ must both be alkyl.

2. A method according to claim 1 wherein the non-aggregating polymer is poly[4,4'-(hexahydro-4-7-methanoindan-5-ylidene)diphenyl terephthalate]; poly[4,4'-isopropylidenebis-(phenyleneoxy-p-phenylene) sulfone]; polystyrene; poly(4,4'-isopropylidene bisphenoxyethyl-co-ethylene terephthalate); halogenated polyethylene; poly-(vinylchloridevinylidene chloride); poly[4,4'-(1-phenyl-2,2,2-trifluoro-ethylidene)-diphenylene carbonate]; polyvinyl acetate; poly(alkylmethacrylate); poly-(vinylacetate-co-crotonic acid) or poly(N-vinylcarbazole).

3. A method according to claim 1 or claim 2 wherein the aggregating polymer is selected from poly[4,4'-(2-norbornylidene)diphenylene carbonate]; poly[4,4'-(hexahydro-4,7-methanoindan-5-ylidene)-diphenylene carbonate], or poly-(4,4'-cyclohexylidene diphenylene carbonate).

4. A method according to any one of the preceding claims wherein the dye is a thiapyrylium dye.

5. A method according to any one of the preceding claims wherein the aggregate particles have a predominant particle size of less than 0.5 µm.

6. A method according to any one of the preceding claims wherein the composition is free of aggregate particles having a size greater than 3.0 µm.

**Patentansprüche**

1. Verfahren zur Herstellung einer heterogenen photoleitfähigen Zusammensetzung, bei dem ein Pyryliumfarbstoff in Lösung mit einem elektrisch isolierenden Polymer unter Bildung von photoleifähigen Aggregatteilchen mit einer dominierenden Teilchengröße von weniger als 1 Micrometer vereinigt wird, dadurch gekennzeichnet, daß der Pyryliumfarbstoff mit einer Polymermischung vereinigt wird, die besteht aus:

i) 50,0 bis 99,9 Gew.-% eines keine Aggregate bildenden Polymeren, das die Teilchengröße und die Teilchengrößenverteilung der in der Mischung erzeugten Aggregatteilchen zu vermindern vermag, wobei das keine Aggregate bildende Polymer ausgewählt ist aus:

a) Poly[(4,4'-alkylidenbis(arylenoxy-p-arylen)sulfonen)];

b) Additionspolymeren und -copolymeren, bei denen von mindestens 10% der wiederkehrenden Einheiten eine Gruppe ausgewählt aus: Aryl, Alkyl, Acetat, Aryl-substituierten Acetalen, Halogen, Halobenzoaten, Hydroxyl und Carboxyl absteht, und die wiederkehrenden Einheiten sich von einer

Verbindung ableiten, die eine polymerisierbare ethylenisch ungesättigte Alkylengruppe mit zwei bis vier C-Atomen aufweist;

c) Polymeren und Copolymeren, bei denen mindestens 10% der wiederkehrenden Einheiten aus einer photoleitfähigen Komponente, ausgewählt aus substituierten oder unsubstituierten Carbazolen und substituierten oder unsubstituierten Triarylaminen, aufgebaut sind;

d) Poly(4,4'-alkyliden-bis-2,2',6,6'-tetrahalodiarylencarbonaten);

e) Polyesterpolymeren und -copolymeren, die sich von einer oder mehreren Aryldicarbonsäuren und einem oder mehreren Polyolen, ausgewählt aus Alkylenglykolen; 4,4'-Alkylidendiarylendiolen; 4,4'-Alkylidendiarylenoxyalkylendiolen; 4,4'-Polycycloalkylidendiarylendiolen und 4,4'-Polycycloalkylidendiarylenoxyalkylendiolen, einschließlich Estern derartiger Säuren und derartiger Polyole ableiten; oder

f) Poly[4,4'-(1-phenyl-2,2,2-trifluorethyliden)-diphenylencarbonaten] wobei gilt, daß Alkyl und Alkylensofern nichts anderes angegeben ist-1 bis 4 C-Atome aufweisen, Halogen die Bedeutung von Chlor, Brom oder Fluor hat, Aryl für Phenyl oder Naphthyl steht; Arylen Phenylen oder Naphthylen ist und Polycycloalkyliden für einen gesättigten Kohlenwasserstoffring mit bis zu 19 C-Atomen steht; und

ii) 0,1 bis 50,0 Gew.-% eines Aggregate bildenden Polymeren mit wiederkehrenden Einheiten der folgenden Formel:

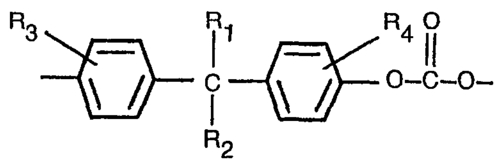
,

in der bedeuten:

$R_1$ und $R_2$ einzeln Wasserstoff oder Alkyl, wobei $R_1$ und $R_2$ gleich oder verschieden sein können oder $R_1$ und $R_2$ gemeinsam die C-Atome, die zur Vervollständigung eines cyclischen Kohlenwasserstoffrestes mit bis zu 14 Ring-C-Atomen erforderlich sind und

$R_3$ und $R_4$ Wasserstoff oder Alkyl;

wobei gilt, daß, wenn sowohl $R_1$ als auch $R_2$ die Bedeutung von Methyl haben, $R_3$ als auch $R_4$ für Alkyl stehen müssen.

2. Verfahren nach Anspruch 1, dadurch gekennzeichnet, daß das keine Aggregate bildene Polymer Poly[4,4'-(hexahydro-4-7-methanoindan-5-yliden)diphenylterephthalat]; Poly[4,4'-isopropyliden-bis-(phenylenoxy-p-phenylen)sulfon], Polystyrol; Poly(4,4'-isopropylidenbisphenoxyethyl-co-ethylenterephthalat); halogeniertes Polyethylen; Poly-(vinylchloridvinylidenchlorid); Poly[4,4'-(1-phenyl-2,2,2-trifluorethyliden)-diphenylencarbonat]; Polyvinylacetat; Poly(alkylmethacrylat); Poly-(vinylacetat-co-crotonsäure) oder Poly(N-vinylcarbazol) ist.

3. Verfahren nach Anspruch 1 oder 2, dadurch gekennzeichnet, daß das Aggregate bildende Polymer ausgewählt ist aus: Poly[4,4'-(2-norbornyliden)diphenylencarbonat]; Poly[4,4'-(hexahydro-4,7-methanoindan-5-yliden)-diphenylencarbonat] oder Poly-(4,4'-cyclohexylidendiphenylencarbonat).

4. Verfahren nach einem der vorstehenden Ansprüche, dadurch gekennzeichnet, daß man als Farbstoff einen Thiapyryliumfarbstoff verwendet.

5. Verfahren nach einem der vorstehenden Ansprüche, dadurch gekennzeichnet, daß die Aggregatteilchen zum überwiegenden Teil eine Teilchengröße von weniger als 0,5 µm haben.

6. Verfahren nach einem der vorstehenden Ansprüche, dadurch gekennzeichnet, daß die Zusammensetzung frei von Aggregatteilchen einer Größe von über 3,0 µm ist.

**Revendications**

1. Procédé pour la préparation d'une composition photoconductrice hétérogène dans lequel un colorant pyrylium est associé en solution à un polymère électriquement isolant pour former des particules photoconductrices sous forme d'agrégats, ces particules ayant une dimension prédominante inférieure à 1 µm, caractérisé en ce que le colorant pyrylium est associé à un mélange de polymères consistant en:

i) de 50,0 à 99,9% en masse d'un polymère ne formant pas d'agrégats apte à réduire la dimension des particules et la rèpartition granulométrique des particules sous forme d'agrégats formées dans le mélange, ce polymère ne formant pas d'agrégats étant choisi parmi:

a) des poly[(4,4'-alkylidène bis (arylèneoxy-p-arylène)sulfones)];

b) des polymères et copolymères d'addition dont au moins 10% des motifs comprennent, en chaîne latérale, un groupe choisi parmi les groupes aryle, alkyle, acétate, acétals substitués par un groupe aryle, un atome d'halogène, un groupe halogénobenzoate, hydroxyle et carboxyle, les motifs mentionnés précédemment dérivant d'un composé ayant un groupe alkylène à insaturation éthylénique polymérisable contenant 2 à 4 atomes de carbone;

c) des polymères et copolymères dont au moins 10% des motifs comprennent un composé photoconducteur choisi parmi des carbazoles substitués ou non et des triarylamines substituées ou non;

d) des polycarbonates de 4,4'-alkylidène-bis-2,2',6,6'-tétrahalogénodiarylène;

e) des polyesters et copolyesters dérivés d'un ou plusieurs acides aryldicarboxyliques et d'un ou plusieurs polyols choisis parmi des alkylèneglycols, des 4,4'-alkylidènediarylènediols, des 4,4'-alkylidène-diarylène oxyalkylènediols, des 4,4'-polycycloalkylidènediarylènediols, des 4,4'polycycloalkylidène-diarylène oxyalkylènediols; et des esters de ces acides et polyols; ou

f) des polycarbonates de 4,4'-(1-phényl-2,2,2-trifluoroéthylidène)-diphénylène, dans lesquels les groupes alkyle et alkylène ont, à moins que ce ne soit précisé autrement, de 1 à 4 atomes de carbone; l'atome d'halogène est le chlore, le brome ou le fluor; le groupe aryle est phényle ou naphtyle; le groupe arylène est phénylène ou naphtylène et le groupe polycycloalkylidène est un cycle hydrocarboné saturé ayant jusqu'à 19 atomes de carbone, et

ii) de 0,1 à 50,0% en masse d'un polymère formant des agrégats comprenant des motifs de structure:

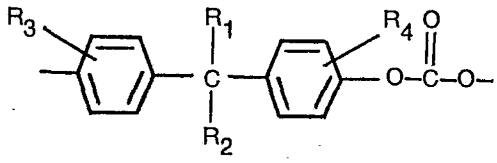 ,

où $R^1$ et $R^2$, pris séparément, sont identiques ou différents et représentent un atome d'hydrogène ou un groupe alkyle

ou bien $R^1$ et $R^2$, pris ensemble, représentent les atomes de carbone nécessaires pour former un radical hydrocarboné cyclique ayant jusqu'à 14 atomes de carbone dans le cycle, et

$R^3$ et $R^4$ représentent un atome d'hydrogène ou un radical alkyle,

à la condition que $R^3$ et $R^4$ soient tous deux un groupe alkyle quand $R^1$ et $R^2$ sont tous deux un groupe méthyle.

2. Procédé conforme à la revendication 1, dans lequel le polymère ne formant pas d'agrégats est le polytéréphtalate de 4,4'-(hexahydro-4,7-méthanoindan-5-ylidène) diphényle; la poly[4,4'-isopropylidènebis-(phénylèneoxy-p-phénylène)-sulfone; le polystyrène; le copolytéréphtalate de 4,4'-isopropylidènebisphénoxyéthyle et d'éthylène; du polyéthylène halogéné; le copolymère de chlorure de vinyl et de chlorure de vinylidène; le polycarbonate de 4,4'-(1-phényl-2,2,2-trifluoro-éthylidène)-diphénylène; le polyacétate de vinyle; le polyméthacrylate d'alkyle; le copolymère d'acétate de vinyle et d'acide crotonique ou le poly(N-vinylcarbazole).

3. Procédé conforme aux revendications 1 ou 2, dans lequel le polymère formant des agrégats est choisi parmi le polycarbonate de 4,4'-(2-norbornylidène) diphénylène; le polycarbonate de 4,4'-(hexahydro-4,7-méthanoindan-5-ylidène)-diphénylène ou le polycarbonate de 4,4'-cyclohexylidène diphénylène.

4. Procédé conforme à l'une quelconque des revendications précédentes, dans lequel le colorant est un colorant thiapyrylium.

5. Procédé conforme à l'une quelconque des revendications précédentes dans lequel la dimension prédominante des particules sous forme d'agrégats est inférieure à 0,5 µm.

6. Procédé conforme à l'une quelconque des revendications précédentes, dans lequel la composition ne contient pas de particules sous forme d'agrégats ayant une dimension supérieure à 3,0 µm.